# EUROPEAN PATENT SPECIFICATION

(11) **EP 2 949 696 B1**
(45) Date of publication and mention of the grant of the patent: **19.02.2020**
(21) Application number: 14743218.1
(22) Date of filing: 23.01.2014
(51) Int. Cl.: C08F 279/02, C08F 297/02, C08K 5/00, C08K 5/098, C08K 5/14, C08K 5/103, C09K 3/10, C09K 8/50, F16J 15/32, F16J 15/3284

(54) **CROSS-LINKABLE RUBBER COMPOSITION FOR SEAL MATERIAL USED IN OIL FIELD OR GAS WELL, AND SEAL MATERIAL**
VERNETZBARE KAUTSCHUKZUSAMMENSETZUNG FÜR EIN DICHTUNGSMATERIAL IN EINEM ÖLFELD ODER GASBOHRLOCH UND DICHTUNGSMATERIAL
COMPOSITION DE CAOUTCHOUC RÉTICULABLE POUR MATÉRIAU D'ÉTANCHÉITÉ UTILISÉ DANS UN CHAMP DE PÉTROLE OU UN PUITS DE GAZ, ET MATÉRIAU D'ÉTANCHÉITÉ

(30) Priority: 28.01.2013 JP 2013013216
(43) Date of publication of application: 02.12.2015
(73) Proprietor: Zeon Corporation, Tokyo 100-8246 (JP)
(72) Inventor: KATADA, Arinobu, Tokyo 100-8246 (JP)
(74) Representative: Adam, Holger
(86) International application number: PCT/JP2014/051384
(87) International publication number: WO 2014/115806

(56) References cited:
- EP-A1- 2 033 990
- WO-A1-2005/092971
- WO-A1-2011/077596
- JP-A- 2001 055 471
- JP-A- 2001 151 939
- JP-A- 2003 221 467
- JP-A- 2005 281 387
- JP-A- 2005 501 962
- JP-A- 2006 206 661
- US-A- 4 843 114
- US-A- 5 696 190
- US-A1- 2006 019 105

## Description

### TECHNICAL FIELD

The present invention relates to the use of a cross-linkable rubber composition as a seal material at an oilfield or gas well.

### BACKGROUD ART

Due to the rapidly increasing demand for energy and the advances made in technology for meeting such energy demand, the exploitation of oilfields and gas wells which contain hydrogen sulfide and other sulfides is becoming increasingly important.

As a seal material for oilfield drilling equipment used in oilfields or gas wells which contain such hydrogen sulfide etc., in general fluororubber and other high heat resistance rubber are being used (for example, see Patent Document 1). However, in fluororubber, a production process of a starting material is complicated and, further, it takes time for shaping, so there is the problem that the production costs become high. Therefore, a material to take the place of fluororubber has been sought as a seal material for oilfield drilling equipment.

JP 2006-206661 A discloses a rubber composition comprising a nitrile group-containing copolymer rubber (A) which contains 10 to 55 wt% of α,β-ethylenically unsaturated nitrile monomer units and has an iodine value of 120 or less, α,β-ethylenically unsaturated carboxylic acid metal salt (C), and an organic peroxide cross-linking agent (D).

WO 2005/092971 A1 discloses a masterbatch composition comprising α,β-ethylenically unsaturated nitrile monomer unit-containing copolymer rubber, zinc methacrylate, and an organic peroxide cross-linking agent.

JP 2003-221467 A discloses a rubber composition comprising a nitrile group-containing copolymer rubber (A) having an iodine value of 100 or less, α,β-ethylenically unsaturated carboxylic acid metal salt (B), and an organic peroxide cross-linking agent (D).

JP 2005-281387 A discloses a rubber composition comprising a nitrile group-containing copolymer rubber which contains 10 to 60 wt% of α,β-ethylenically unsaturated nitrile monomer units and has an iodine value of 100 or less, α,β-ethylenically unsaturated carboxylic acid metal salt (C), and a vulcanizing agent.

EP 2 033 990 A1 discloses a nitrile rubber composition comprising a nitrile rubber (a) including an α,β-ethylenically unsaturated nitrile monomer unit and having iodine value of 100 or less, α,β-ethylenically unsaturated carboxylic acid metal salt (b) and an organic peroxide cross-linking agent.

US 5 696 190 A discloses a curable elastomer composition comprising an elastomer such as NBR, zinc dimethacrylate and a peroxide.

US 2006/019105 A1 discloses a curable elastomeric composition comprising a curable elastomer such as nitrile elastomer, a metal salt of an ethylenically unsaturated carboxylic acid, and an organic peroxide.

### PRIOR ART DOCUMENTS

### PATENT DOCUMENTS

Patent Document 1: WO01/032773 (European Patent Publication No. 1245635)

### SUMMARY OF THE INVENTION

### PROBLEM TO BE SOLVED BY THE INVENTION

The present invention has as its object the provision of the use of a rubber composition which is excellent in shapeability, is high in durability against hydrogen sulfide and other corrosive gases, and is suitable for application as a seal material as a seal material at an oilfield or gas well.

### MEANS FOR SOLVING THE PROBLEMS

The inventor took note of a nitrile group-containing copolymer rubber as rubber which is excellent in shapeability and studied improvement of durability against hydrogen sulfide and other corrosive gases, whereupon the inventor discovered that a rubber composition obtained by adding, to a nitrile group-containing copolymer rubber, an α,β-ethylenically unsaturated carboxylic acid metal salt and organic peroxide cross-linking agent is excellent in durability against hydrogen sulfide and other corrosive gases and thereby completed the present invention.

That is, according to the present invention, there is provided the use of a cross-linkable rubber composition as a seal material at an oilfield or gas well in the presence of hydrogen sulfide, wherein the cross-linkable rubber composition comprises a nitrile group-containing copolymer rubber (A) which contains α,β-ethylenically unsaturated nitrile monomer units 10 to 60 wt% and has an iodine value of 120 or less, an α,β-ethylenically unsaturated carboxylic acid metal salt (B), and an organic peroxide cross-linking agent (C).

Further embodiments of the description are disclosed in the depending claims.

In the cross-linkable rubber composition used according to the invention as a seal material, the α,β-ethylenically unsaturated carboxylic acid metal salt (B) is preferably a zinc salt of an α,β-ethylenically unsaturated carboxylic acid, more preferably zinc methacrylate.

The cross-linkable rubber composition used according to the invention as a seal material preferably further comprises a co-cross-linking agent. As the co-cross-linking agent, a tri- to pentafunctional methacrylate compound and/or tri- to pentafunctional acrylate compound is suitable.

The cross-linkable rubber composition used according to the invention as a seal material is one which is used in the presence of hydrogen sulfide, preferably one which is used in an environment with a ratio of hydrogen sulfide of 1 volume ppb to 50 vol%.

Furthermore, the cross-linkable rubber composition used according to the invention as a seal material is preferably one which is used for producing an O-ring with a cross-sectional diameter of 5 mm or more.

Further, according to the present invention, there is provided the use of a seal material at an oilfield or gas well in the presence of hydrogen sulfide, wherein the seal material is comprised of the above-mentioned cross-linkable rubber composition, which is cross-linked.

The seal material used in the present invention is preferably an O-ring with a cross-sectional diameter of 5 mm or more.

The seal material used in the present invention is one which is used in the presence of hydrogen sulfide, preferably is one which is used in an environment with a ratio of hydrogen sulfide of 1 volume ppb to 50 vol%.

### EFFECTS OF THE INVENTION

According to the present disclosure, there are provided a cross-linkable rubber composition which is excellent in shapeability, high in durability against hydrogen sulfide and other corrosive gases, and suitable for application as a seal material which is used at an oilfield or gas well and a seal material used at an oilfield or gas well which is obtained by cross-linking the rubber composition and which is high in durability against hydrogen sulfide and other corrosive gases.

### BRIEF DESCRIPTION OF DRAWINGS

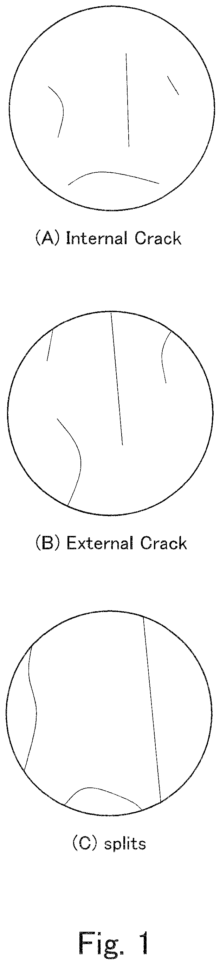

FIG. 1 is a view for explaining criteria for evaluation in a Rapid Gas Decompression (GRD) test.

### DESCRIPTION OF EMBODIMENTS

### <Cross-Linkable Rubber Composition for Seal Material>

The cross-linkable rubber composition for a seal material used in the present invention is a rubber composition which is used for obtaining a seal material used at an oilfield or gas well in the presence of hydrogen sulfide and comprises a nitrile group-containing copolymer rubber (A) which contains α,β-ethylenically unsaturated nitrile monomer units 10 to 60 wt% and has an iodine value of 120 or less, an α,β-ethylenically unsaturated carboxylic acid metal salt (B), and an organic peroxide cross-linking agent (C).

### <Nitrile Group-Containing Copolymer Rubber (A)>

First, the nitrile group-containing copolymer rubber (A) used in the present invention will be explained.

The nitrile group-containing copolymer rubber (A) used in the present invention is rubber with an iodine value of 120 or less which is obtained by copolymerization of at least an α,β-ethylenically unsaturated nitrile monomer with another monomer which can be copolymerized with the same.

The α,β-ethylenically unsaturated nitrile monomer is not particularly limited so long as an α,β-ethylenically unsaturated compound which has a nitrile group. For example, acrylonitrile; α-chloroacrylonitrile, α-bromoacrylonitrile, or other α-halogenoacrylonitrile; methacrylonitrile or other α-alkylacrylonitrile; etc. may be mentioned. Among these as well, acrylonitrile and methacrylonitrile are preferable, while acrylonitrile is particularly preferable. The α,β-ethylenically unsaturated nitrile monomer may be used as a single type alone or may be jointly used as a plurality of types.

The content of the α,β-ethylenically unsaturated nitrile monomer units is 10 to 60 wt% with respect to the total monomer units which form the nitrile group-containing copolymer rubber (A), preferably 15 to 55 wt%, more preferably 20 to 50 wt%. If the content of the α,β-ethylenically unsaturated nitrile monomer units is too small, when made into a seal material by cross-linking, the oil resistance is liable to fall, while conversely if too large, the cold resistance may fall.

The monomer which is copolymerized with the α,β-ethylenically unsaturated nitrile monomer for forming the nitrile group-containing copolymer rubber (A) used in the present invention is not particularly limited, but from the viewpoint of expressing rubber elasticity, a conjugated diene monomer is preferably mentioned.

The conjugated diene monomer is not particularly limited so long as it is one which can be copolymerized with an α,β-ethylenically unsaturated nitrile monomer. For example, 1,3-butadiene, isoprene, 2,3-dimethyl-1,3-butadiene, 1,3-pentadiene, etc. may be mentioned. Among these as well, 1,3-butadiene and isoprene are preferable, and 1,3-butadiene is particularly preferable. The conjugated diene monomer may be used as a single type alone or may be jointly used as a plurality of types.

The content of the conjugated diene monomer units is preferably 40 to 90 wt% with respect to the total monomer units which form the nitrile group-containing copolymer rubber (A), more preferably 45 to 85 wt%, furthermore preferably 50 to 80 wt%. If the content of the conjugated diene monomer units is too small, when made into a seal material by cross-linking, the rubber elasticity is liable to fall, while conversely if too large, the heat resistance and chemical resistance may be impaired.

The nitrile group-containing copolymer rubber (A) used in the present invention may be one which is obtained by copolymerizing, in addition to the α,β-ethylenically unsaturated nitrile monomer and conjugated diene monomer, another monomer which can copolymerize with the same. As such another monomer, a nonconjugated diene monomer, ethylene, α-olefin monomer, aromatic vinyl monomer, α,β-ethylenically unsaturated monocarboxylic acid and its ester, α,β-ethylenically unsaturated polyvalent carboxylic acid and its monoester, polyvalent ester, and anhydride, a cross-linkable monomer, copolymerizable antioxidant, etc. may be mentioned.

As the nonconjugated diene monomer, one which has 5 to 12 carbon atoms is preferable. For example, 1,4-pentadiene, 1,4-hexadiene, vinylnorbornene, dicyclopentadiene, etc. may be mentioned.

As the α-olefin monomer, one which has 3 to 12 carbon atoms is preferable. For example, propylene, 1-butene, 4-methyl-1-pentene, 1-hexene, 1-octene, etc. may be mentioned.

As the aromatic vinyl monomer, for example, styrene, α-methylstyrene, vinylpyridine. etc. may be mentioned.

As the α,β-ethylenically unsaturated monocarboxylic acid, for example, acrylic acid, methacrylic acid, crotonic acid, cinnamic acid, etc. may be preferably mentioned.

As the α,β-ethylenically unsaturated monocarboxylic acid ester, for example, ethyl (meth)acrylate (meaning ethyl acrylate and ethyl methacrylate, same below), butyl (meth)acrylate, 2-ethylhexyl (meth)acrylate, etc. may be mentioned.

As the α,β-ethylenically unsaturated polyvalent carboxylic acid, for example, maleic acid, fumaric acid, itaconic acid, etc. may be mentioned.

As the α,β-ethylenically unsaturated polyvalent carboxylic acid monoester, for example, monomethyl maleate, monoethyl maleate, monopropyl maleate, mono-n-butyl maleate, and other maleic acid monoalkyl esters; monomethyl fumarate, monoethyl fumarate, monopropyl fumarate, mono-n-butyl fumarate, and other fumaric acid monoalkyl esters; monomethyl citraconate, monoethyl citraconate, monopropyl citraconate, mono-n-butyl citraconate, and other citraconic acid monoalkyl esters; monomethyl itaconate, monoethyl itaconate, monopropyl itaconate, mono-n-butyl itaconate, and other itaconic acid monoalkyl esters; etc. may be mentioned.

As the α,β-ethylenically unsaturated polyvalent carboxylic acid polyvalent ester, for example, dimethyl maleate, di-n-butyl maleate, dimethyl fumarate, di-n-butyl fumarate, dimethyl itaconate, di-n-butyl itaconate, etc. may be mentioned.

As the α,β-ethylenically unsaturated polyvalent carboxylic acid anhydride, for example, maleic anhydride, itaconic anhydride, etc. may be mentioned.

As the cross-linkable monomer, for example, divinylbenzene and other divinyl compound; ethylene di(meth)acrylate, diethyleneglycol di(meth)acrylate, ethyleneglycol di(meth)acrylate, and other di(meth)acrylic acid esters; trimethylolpropane tri(meth)acrylate, and other trimethacrylic acid esters; and other polyfunctional ethylenically unsaturated monomers and also N-methylol (meth)acrylamide, N,N'-dimethylol (meth)acrylamide, and other self cross-linkable monomers etc. may be mentioned.

As the copolymerizable antioxidant, for example, N-(4-anilinophenyl)acrylamide, N-(4-anilinophenyl)methacrylamide, N-(4-anilinophenyl)cinnamide, N-(4-anilinophenyl)crotonamide, N-phenyl-4-(3-vinylbenzyloxy)aniline, N-phenyl-4-(4-vinylbenzyloxy)aniline, etc. may be mentioned.

As these other copolymerizable monomers which can be copolymerized, a plurality of types may be used together. The content of the units of the other monomers is preferably 50 wt% or less with respect to the total monomer units which form the nitrile group-containing copolymer rubber (A), more preferably 30 wt% or less, furthermore preferably 10 wt% or less.

The iodine value of the nitrile group-containing copolymer rubber (A) is 120 or less, preferably 60 or less, more preferably 30 or less. If the iodine value of the nitrile group-containing copolymer rubber (A) is too high, when made into a seal material by cross-linking, the heat resistance and ozone resistance are liable to fall.

The Polymer Mooney viscosity (ML₁₊₄, 100°C) of the nitrile group-containing copolymer rubber (A) is preferably 10 to 200, more preferably 20 to 110, particularly preferably 30 to 100. If the Polymer Mooney viscosity of the nitrile group-containing copolymer rubber (A) is too low, when made into a seal material by cross-linking, the mechanical properties are liable to fall. Conversely, if too high, the processability of the cross-linkable rubber composition may fall.

The method of production of the nitrile group-containing copolymer rubber (A) used in the present invention is not particularly limited. For example, the method of copolymerizing an α,β-ethylenically unsaturated nitrile monomer, conjugated diene monomer, and other monomer which can be copolymerized with these, added in accordance with need, is simple and therefore preferred. As the polymerization method, any of the known emulsion polymerization method, suspension polymerization method, bulk polymerization method, and solution polymerization method may be employed, but since control of the polymerization reaction is easy, the emulsion polymerization method is preferable. Note that, when the iodine value of the copolymer which is obtained by copolymerization is too high, the copolymer may be hydrogenated (hydrogenation reaction). The method of hydrogenation in this case is not particularly limited. A known method may be employed.

### <α,β-ethylenically Unsaturated Carboxylic Acid Metal Salt (B)>

The α,β-ethylenically unsaturated carboxylic acid metal salt (B) used in the present invention is a salt of an α,β-ethylenically unsaturated carboxylic acid and a metal.

In the present invention, by mixing, into the above-mentioned nitrile group-containing copolymer rubber (A), the α,β-ethylenically unsaturated carboxylic acid metal salt (B) and the later explained organic peroxide cross-linking agent (C), it is possible to make the cross-linked product (seal material) which is obtained by cross-linking the cross-linkable rubber composition for a seal material used in the present invention excellent in durability against corrosive gases, in particular, durability against hydrogen sulfide.

Note that, in the past, application of nitrile rubber like the above-mentioned nitrile group-containing copolymer rubber (A) to a seal material which is used at an oilfield or gas well, in particular, application to a seal material which is used at an oilfield or gas well which contains hydrogen sulfide or other sulfides, was never studied. Therefore, the durability against hydrogen sulfide and other corrosive gases was not particularly considered. Such durability against corrosive gases was not even evaluated in fact.

In regard to this, the inventor studied improvement of the durability against hydrogen sulfide and other corrosive gases for such a nitrile rubber, whereupon the inventor discovered that by using a nitrile rubber constituted by the above-mentioned nitrile group-containing copolymer rubber (A) and mixing into this an α,β-ethylenically unsaturated carboxylic acid metal salt (B) and the later explained organic peroxide cross-linking agent (C), the shapeability is made excellent while the durability against hydrogen sulfide and other corrosive gases is improved. Based on such a discovery, the inventor completed the present invention. Further, due to this, such a nitrile rubber is suitable for application for a seal material which is used at an oilfield or gas well, in particular, application for a seal material which is used at an oilfield or gas well which contains hydrogen sulfide or other sulfides.

The α,β-ethylenically unsaturated carboxylic acid which forms the α,β-ethylenically unsaturated carboxylic acid metal salt (B) has at least a monovalent free (not esterified) carboxyl group. An α,β-ethylenically unsaturated monocarboxylic acid, α,β-ethylenically unsaturated dicarboxylic acid, α,β-ethylenically unsaturated dicarboxylic acid monoester, etc. may be illustrated.

As the α,β-ethylenically unsaturated monocarboxylic acid, acrylic acid, methacrylic acid, crotonic acid, 3-butenic acid, etc. may be mentioned. As the α,β-ethylenically unsaturated dicarboxylic acid, maleic acid, fumaric acid, itaconic acid, etc. may be mentioned. As the α,β-ethylenically unsaturated dicarboxylic acid monoester, monomethyl maleate, monoethyl maleate, monomethyl itaconate, monoethyl itaconate, etc. may be mentioned. Among these as well, from the viewpoint of the strength characteristics when made into a seal material by cross-linking, an α,β-ethylenically unsaturated carboxylic acid with no ester groups is preferable, an α,β-ethylenically unsaturated monocarboxylic acid is more preferable, and acrylic acid and methacrylic acid are particularly preferable.

As the α,β-ethylenically unsaturated carboxylic acid metal salt (B), an α,β-ethylenically unsaturated carboxylic acid polyvalent metal salt is preferable.

As the metal which forms the α,β-ethylenically unsaturated carboxylic acid metal salt (B), for example, zinc, magnesium, calcium, barium, titanium, chromium, iron, cobalt, nickel, aluminum, tin, lead, etc. may be mentioned. Among these as well, from the viewpoint of the strength characteristics when made into a seal material by cross-linking, zinc, magnesium, calcium, and aluminum are preferable, while zinc is particularly preferable.

Note that, in the present invention, the α,β-ethylenically unsaturated carboxylic acid metal salt (B) may be produced by mixing, into the nitrile group-containing copolymer rubber (A), an α,β-ethylenically unsaturated carboxylic acid which forms the α,β-ethylenically unsaturated carboxylic acid metal salt (B) and a metal or metal compound, and causing the two to react in the nitrile group-containing copolymer rubber (A). By producing the α,β-ethylenically unsaturated carboxylic acid metal salt (B) by such a method, it is possible to make the obtained α,β-ethylenically unsaturated carboxylic acid metal salt (B) disperse in the nitrile group-containing copolymer rubber (A) well. Note that, as the metal compound used in this case, oxides, hydroxides, carbonates, etc. of the above-mentioned metal may be mentioned. Among these, zinc oxide and zinc carbonate are preferably used.

When mixing, into the nitrile group-containing copolymer rubber (A), the α,β-ethylenically unsaturated carboxylic acid and metal or metal compound to produce the α,β-ethylenically unsaturated carboxylic acid metal salt (B), the metal or metal compound is mixed and reacted in an amount of preferably 0.5 to 4 mol with respect to 1 mol of the α,β-ethylenically unsaturated carboxylic acid, more preferably 0.7 to 3 mol. If the amount of the metal or metal compound used is too small or too large, the reaction between the α,β-ethylenically unsaturated carboxylic acid and metal or metal compound will become difficult to initiate. However, when using, as the metal compound, zinc oxide, zinc carbonate, zinc hydroxide, etc., since even alone these function as cross-linking accelerators as compounding agents of rubber, even if exceeding the upper limit of this range, depending on the composition of the formulation, sometimes no problem occurs.

Further, the α,β-ethylenically unsaturated carboxylic acid metal salt (B) is preferably fine in size so long as no problem occurs in handling. In particular, one with a ratio of content of particles with a volume average particle size of 20 µm or more of 5% or less is preferable. To make the α,β-ethylenically unsaturated carboxylic acid metal salt (B) fine in size in this way, the method of classifying the α,β-ethylenically unsaturated carboxylic acid metal salt (B) using a wind power classifier or a sieve classifier etc. may be used. Alternatively, when mixing, into the nitrile group-containing copolymer rubber (A), the α,β-ethylenically unsaturated carboxylic acid and metal or metal compound to produce an α,β-ethylenically unsaturated carboxylic acid metal salt (B), the method of classifying the metal or metal compound using a wind power classifier or a sieve classifier etc. or the like may be used to make the α,β-ethylenically unsaturated carboxylic acid metal salt (B) fine in size.

In the cross-linkable rubber composition for a seal material used in the present invention, the content of the α,β-ethylenically unsaturated carboxylic acid metal salt (B) is preferably 1 to 100 parts by weight with respect to 100 parts by weight of the nitrile group-containing copolymer rubber (A), more preferably 1 to 50 parts by weight, furthermore preferably 2 to 20 parts by weight. If the content of the α,β-ethylenically unsaturated carboxylic acid metal salt (B) is too small, sometimes the effect of improvement of the durability against hydrogen sulfide and other corrosive gases can no longer be obtained, while conversely if too large, sometimes the elongation will fall too much.

### <Organic Peroxide Cross-Linking Agent (C)>

As the organic peroxide cross-linking agent (C), a conventional known one may be used. Dicumyl peroxide, cumen hydroperoxide, t-butylcumyl peroxide, p-mentane hydroperoxide, di-t-butyl peroxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butyl-peroxy)-n-butylvalerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoylperoxide, t-butylperoxyisopropyl carbonate, t-butylperoxybenzoate, etc. may be mentioned, but since the effect of the present invention becomes more remarkable, 1,3-bis(t-butylperoxyisopropyl)benzene and 1,4-bis(t-butylperoxyisopropyl)benzene are preferable. These may be used as single type alone or as plurality of types together.

In the cross-linkable rubber composition for a seal material used in the present invention, the content of the organic peroxide cross-linking agent (C) is preferably 1 to 20 parts by weight with respect to 100 parts by weight of the nitrile group-containing copolymer rubber (A), more preferably 1 to 15 parts by weight, furthermore preferably 1 to 10 parts by weight. If the content of the organic peroxide cross-linking agent (C) is too small, when made into a seal material by cross-linking, the mechanical properties (strength at break etc.) are liable to deteriorate. On the other hand, if too large, the fatigue resistance may deteriorate.

Further, the cross-linkable rubber composition for a seal material used in the present invention preferably further contains a co-cross-linking agent from the viewpoint that the effect of the present invention becomes much more remarkable. As the co-cross-linking agent, a low molecular weight or high molecular weight compound which has a plurality of radical reactive unsaturated groups in its molecule is preferable. For example, divinylbenzene, divinylnaphthalene and other polyfunctional vinyl compound; triallyl isocyanurate, trimethacryl isocyanurate, and other isocyanurates; triallyl cyanurate and other cyanurates; N,N'-m-phenylene dimaleimide and other maleimides; diallyl phthalate, diallyl isophthalate, diallyl maleate, diallyl fumarate, diallyl sebacate, triallyl phosphate, and other allyl esters of polyvalent acids; diethyleneglycol bisallylcarbonate; ethyleneglycol diallylether, a triallyl ether of trimethylolpropane, a partial allyl ether of pentaerythrit, and other allyl ethers; allylated novolac resin, allylated resol resin, and other allyl-modified resins; trimethylolpropane trimethacrylate, trimethylolpropane triacrylate and other tri- to pentafunctional methacrylate compounds or acrylate compounds; etc. may be mentioned. Among these as well, from the viewpoint of the effect of the present invention become much more remarkable, a tri- to pentafunctional methacrylate compound and acrylate compound are preferable, and trimethylolpropane trimethacrylate is particularly preferable.

In the cross-linkable rubber composition for a seal material used in the present invention, the content of the co-cross-linking agent is preferably 1 to 20 parts by weight with respect to 100 parts by weight of the nitrile group-containing copolymer rubber (A), more preferably 1 to 10 parts by weight.

Furthermore, the cross-linkable rubber composition for a seal material used in the present invention may have blended into it, in addition to the nitrile group-containing copolymer rubber (A), α,β-ethylenically unsaturated carboxylic acid metal salt (B), and organic peroxide cross-linking agent (C) as well as the co-cross-linking agent which is used according to need, other compounding agents which are usually used in the field of rubber processing. As such compounding agents, for example, a reinforcing agent, filler, antioxidant, photostabilizer, scorch preventer, plasticizer, processing aid, slip agent, tackifier, lubricant, flame retardant, acid acceptor, antifungal agent, antistatic agent, coloring agent, silane coupling agent, cross-linking aid, cross-linking retardant, foam agent, etc. may be mentioned. As the amounts of these compounding agents, amounts according to the purposes of inclusion may be suitably employed.

Further, the cross-linkable rubber composition for a seal material used in the present invention may have mixed into it rubber other than the above nitrile group-containing copolymer rubber (A) in a range not detracting from the effect of the present invention.

The cross-linkable rubber composition for a seal material used in the present invention is prepared by mixing the above ingredients in a preferably nonaqueous system. The method of preparing the cross-linkable rubber composition for a seal material used in the present invention is not limited, but usually it can be prepared by mixing the ingredients other than the organic peroxide cross-linking agent (C) and thermally unstable co-cross-linking agent or cross-linking aid etc. in a Bambury mixer, internal mixer, kneader, or other mixer for primary kneading, then transferring the mixture to open rolls etc. to add the organic peroxide cross-linking agent (C) and thermally unstable co-cross-linking agent etc. for secondary kneading. Note that, the primary kneading is usually performed at 10 to 200°C, preferably 30 to 180°C, in temperature, for 1 minute to 1 hour, preferably 1 minute to 30 minutes, while the secondary kneading is usually performed at 10 to 90°C, preferably 20 to 60°C, in temperature, for 1 minute to 1 hour, preferably 1 minute to 30 minutes.

The compound Mooney viscosity (ML₁₊₄, 100°C) of the cross-linkable rubber composition for a seal material used in the present invention is preferably 10 to 300, more preferably 50 to 250, particularly preferably 100 to 200. If the compound Mooney viscosity is too low, when made into a seal material by cross-linking, the mechanical properties are liable to fall, while if too high, the shapeability is liable to deteriorate.

### <Seal Material>

The seal material used in the present invention is one obtained by cross-linking the above-mentioned cross-linkable rubber composition as a seal material and is suitably used as a seal material which is used at an oilfield or gas well in the presence of hydrogen sulfide.

The seal material used in the present invention can be produced by using the above-mentioned cross-linkable rubber composition as a seal material, for example, shaping it by a molding machine which is designed for the desired shape, for example, an extruder, an injection molding machine, a press, a roll, etc., and heating it to cause a cross-linking reaction and fix the shape as a cross-linked product. In this case, it is possible to shape the composition in advance, then cross-link it or shape and cross-link it simultaneously. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Further, depending on the shape, size, etc., even if the surface is cross-linked, sometimes the inside part is not sufficiently cross-linked, so it may be further heated for secondary cross-linking.

As the heating method, press heating, steam heating, oven heating, hot air heating, or other general method which is used for cross-linking rubber may be suitably selected.

The thus obtained seal material used in the present invention is obtained by cross-linking the above-mentioned cross-linkable rubber composition for a seal material used in the present invention, so the durability against hydrogen sulfide or other corrosive gases is high. For this reason, the seal material which is used in an oilfield or gas well (in particular, an oilfield or gas well which contains hydrogen sulfide), in particular, a seal material of oilfield drilling equipment which is used at an oilfield or gas well (for example, packer, blowout preventer, pipe protector, etc.). In particular, the seal material used in the present invention can be used in an environment with a ratio of hydrogen sulfide of preferably 1 volume ppb to 50 vol% in range, more preferably an environment with a ratio of 1 to 40 vol% in range. Even in the case of use under such an environment, excellent durability can be exhibited. Note that, hydrogen sulfide has a boiling point of about - 60°C, so becomes a gas in the air, therefore the above "vol%" is substantially the same value as the "mol%".

Further, the seal material used in the present invention can be suitably used as an O-ring which is used at an oilfield or gas well in particular among the seal materials which are used at an oilfield or gas well. More preferably, it can be used as an O-ring with a cross-sectional diameter (corresponding to thickness of O-ring) of 5 mm or more (more preferably 5 mm to 50 mm) suitable for application at an oilfield or gas well.

### EXAMPLES

Below, examples and a comparative example will be given to explain the present invention more specifically, but the present invention is not limited to these examples. Below, unless specially indicated, "parts" are based on weight. The test or evaluation methods for the physical properties and characteristics are as follows.

### Cross-Linkability Test (Shapeability)

The cross-linkable rubber composition was subjected to a cross-linkability test using a rubber vulcanization tester (product name "Moving Die Rheometer MDR", made by Alpha Technologies) based on JIS K6300-2 under conditions of 170°C and 30 minutes to obtain a cross-linking curve. Further, from the obtained results of the cross-linkability test, the lowest value (ML) of the torque (units: dN·m) and the highest value (MH) of the torque (units: dN·m) were measured. The smaller the lowest value (ML) of the torque, the higher the fluidity in the mold and the better the shapeability that can be judged.

### Mooney Viscosity (Compound Mooney)

The Mooney viscosity of the cross-linkable rubber composition (compound Mooney) was measured in accordance with JIS K6300-1 (units: (ML₁₊₄, 100°C)).

### Normal Physical Properties (Elongation, Tensile Strength, Tensile Stress, Hardness)

The cross-linkable rubber composition was placed in a vertical 15 cm, horizontal 15 cm, depth 0.2 cm mold and press formed while applying a press pressure of 10 MPa at 170°C for 20 minutes to obtain a sheet-shaped cross-linked product. Next, the obtained cross-linked product was transferred to a gear type oven and secondarily cross-linked at 170°C for 4 hours. The obtained sheet-shaped rubber cross-linked product was punched by a No. 3 dumbbell shape to prepare a test piece. Further, the obtained test piece was used, based on JIS K6251, to measure the tensile stress (50% tensile stress, 100% tensile stress), tensile strength, and elongation of the cross-linked rubber and, further, based on JIS K6253, to measure the hardness of the cross-linked rubber using a Durometer Hardness Tester (Type A).

### Rapid Gas Decompression (GRD) Test (Durability Against Hydrogen Sulfide)

Using an inside diameter 37.5 mm and ring diameter (cross-sectional diameter) 5.33 mm mold, the cross-linkable rubber composition was cross-linked at 170°C for 20 minutes under conditions of a pressure of 5 MPa and was secondarily cross-linked at 170°C for 4 hours to obtain an O-ring-shaped test sample. Further, based on ISO 28936-2 Annex B (similar to NORSOK M710), the obtained O-ring shaped test sample was fastened to a predetermined die and held under conditions of 100°C and 15 MPa for 1 hour while running a mixed gas of hydrogen sulfide (H₂S) and nitrogen (N₂) (H₂S: 10 mol%, N₂: 90 mol%). After that, the 1 hour held O-ring shaped test sample was examined at four locations of cut surfaces. Each cut surface was checked for the presence of internal cracks, external cracks, and splits and the number and sizes of these. Here, FIG. 1 schematically shows the states of internal cracks, external cracks, and splits. As shown in FIG. 1, internal cracks are cracks which are formed only inside of an O-ring (cracks which do not reach outer surface), external cracks are cracks which run from the outer surface of an O-ring toward the inside of the O-ring, and splits are cracks which run from the outer surface of an O-ring toward the inside of the O-ring and then reach another part at the outer surface of the O-ring. Note that, each cut surface was evaluated by the following criteria. "0" to "3" were judged as passing and "4" to "5" as failing. Further, this evaluation was performed for three O-ring shaped test samples for each of the examples and comparative example.

### 0: No cracks or splits occurred at all.

1: Cracks occurred. Lengths of cracks are all less than 25% of ring diameter of O-ring shaped test sample (below, referred to as "O-ring cross-sectional diameter"), total length of all cracks equal to O-ring cross-sectional diameter or less, length of external cracks are less than 10% of O-ring cross-sectional diameter, and no splits at all.
2: Not corresponding to the above 1. Cracks occurred. Lengths of cracks are all less than 50% of O-ring cross-sectional diameter, total length of all cracks equal to 2 times the O-ring cross-sectional diameter or less, length of external cracks are less than 25% of O-ring cross-sectional diameter, and no splits at all.
3: Not corresponding to the above 1 and 2. Cracks occurred. Number of internal cracks of lengths of 50% to 80% of O-ring cross-sectional diameter equal to 2 or less, total length of all cracks equal to 3 times the O-ring cross-sectional diameter or less, length of external cracks are less than 50% of O-ring cross-sectional diameter, and no splits at all.
4: Cracks occurred. Total length of all cracks are over 3 times the O-ring cross-sectional diameter, or at least one internal crack which has length of over 80% of O-ring cross-sectional diameter, or at least three internal cracks which have lengths of over 50% of O-ring cross-sectional diameter, or at least one external crack which has a length of 50% or more of O-ring cross-sectional diameter, and no splits at all.
5: Splits occurred.

### <Example 1>

To hydrogenated acrylonitrile-butadiene copolymer rubber (product name "Zetpol 2010H", made by Zeon Corporation, acrylonitrile units 36 wt%, iodine value 11) 100 parts, zinc methacrylate 12 parts, FEF carbon black (product name "Seast SO, N550", made by Tokai Carbon) 30 parts, and trimethylolpropane trimethacrylate 5 parts were added. The mixture was kneaded using a Bambury mixer at 50°C for 5 minutes, then was transferred to a roll mill where 1,3-bis(t-butylperoxyisopropyl)benzene and/or 1,4-bis(t-butylperoxyisopropyl)benzene (product name "Luperox F40", made by Arkema, 40% product, remains: CaCO₃ powder) 5 parts was added. The roll mill was used to knead this mixture at 50°C for 15 minutes to obtain a cross-linkable rubber composition.

Further, the obtained cross-linkable rubber composition was evaluated and tested for a cross-linkability test, compound Mooney, normal physical properties (elongation, tensile strength, tensile stress, hardness), and a GRD test (hydrogen sulfide resistance) in accordance with the above-mentioned methods. The results are shown in Table 1 and Table 2.

### <Example 2>

Except for changing the amount of zinc methacrylate from 12 parts to 6 parts and the amount of FEF carbon black from 30 parts to 45 parts, the same procedure was followed as in Example 1 to obtain a cross-linkable rubber composition and the same procedure was followed to evaluate it. The results are shown in Table 1 and Table 2.

### <Comparative Example 1>

Except for not mixing zinc methacrylate and changing the amount of FEF carbon black from 30 parts to 70 parts, the amount of trimethylolpropane trimethacrylate from 5 parts to 10 parts, and the amount of the organic peroxide cross-linking agent (product name "Luperox F40") from 5 parts to 8 parts, the same procedure was followed as in Example 1 to obtain a cross-linkable rubber composition and the same procedure was followed to evaluate it. The results are shown in Table 1 and Table 2.

### Table 1

**Table 1**

| | | | Example 1 | Example 2 | Comparative Example 1 |
|---|---|---|---|---|---|
| Hydrogenated acrylonitrile-butadiene copolymer rubber | | (parts) | 100 | 100 | 100 |
| Zinc methacrylate | | (parts) | 12 | 6 | - |
| FEF carbon black | | (parts) | 30 | 45 | 70 |
| Trimethylolpropane trimethacrylate | | (parts) | 5 | 5 | 10 |
| Organic peroxide cross-linking agent (product name "Luperox F40") | | (parts) | 5 | 5 | 8 |

| Cross-linkability test (170°C, 30 minutes) | | | | | |
|---|---|---|---|---|---|
| | Lowest torque (ML) | (dN·m) | 3.0 | 3.7 | 4.4 |
| | Highest torque (MH) | (dN·m) | 81.4 | 75.2 | 64.9 |

| Mooney viscosity | | | | | |
|---|---|---|---|---|---|
| | Compound Mooney (ML₁₊₄, 100°C) | | 143 | 154 | 178 |

| Normal plysical properties | | | | | |
|---|---|---|---|---|---|
| | Elongation | (%) | 230 | 180 | 170 |
| | Tensile strength | (MPa) | 38.1 | 35.4 | 32.3 |
| | 50% tensile stress | (MPa) | 11.0 | 10.2 | 9.4 |
| | 100% tensile stress | (MPa) | 21.2 | 21.1 | 20.9 |
| | Hardness (Shore A) | | 93 | 92 | 90 |

### Table 2

**Table 2**

| | Test sample no. | Cross-sectional diameter (mm) | Compression rate (%) | Evaluation | Judgment |
|---|---|---|---|---|---|
| Example 1 | 1 | 5.17 | 9 | 3000 | Passing |
| | 2 | 5.19 | 9.3 | 3000 | |
| | 3 | 5.16 | 9.1 | 1000 | |
| Example 2 | 1 | 5.17 | 9.1 | 3000 | Passing |
| | 2 | 5.18 | 9.1 | 3000 | |
| | 3 | 5.19 | 9.1 | 3000 | |
| Comparative Example 1 | 1 | 5.17 | 9.1 | 5541 | Failing |
| | 2 | 5.17 | 9.1 | 4443 | |
| | 3 | 5.18 | 9.1 | 4443 | |

Table 1 shows the compositions of the examples and comparative example as well as the results of evaluation of a cross-linkability test, the compound Mooney, and normal physical properties (elongation, tensile strength, tensile stress, hardness), while Table 2 shows the results of evaluation of a GRD test (resistance to hydrogen sulfide) in the examples and comparative example. Note that, in Table 2, the field of "Evaluation" shows the results of evaluation obtained as a result of observation of the four locations of cut surfaces which are arranged in the order of the lowest evaluations up (that is, "5", "4", "3", "2", "1", "0"). That is, in Sample No. 1 of Example 1, among the four locations of cut surfaces, it is shown that there are one location with an evaluation of "3" and the other three locations all with an evaluation of "0". Further, in Sample No. 2 of Comparative Example 1, among the four locations of cut surfaces, it is shown that there are three locations with an evaluation of "4" and one location with an evaluation of "3".

As shown in Tables 1 and 2, the cross-linkable rubber composition comprised of the nitrile group-containing copolymer rubber (A) to which an α,β-ethylenically unsaturated carboxylic acid metal salt (B) and an organic peroxide cross-linking agent (C) are mixed is low in the lowest value (ML) of the torque at the time of cross-linking and excellent in shapeability, and excellent in results of the GRD test and excellent in durability against hydrogen sulfide (Examples 1 and 2).

On the other hand, when not mixing an α,β-ethylenically unsaturated carboxylic acid metal salt (B), the result was extremely poor in results of the GRD test and was extremely poor in durability against hydrogen sulfide (Comparative Example 1).

## Claims

1. Use of a cross-linkable rubber composition as a seal material at an oilfield or gas well in the presence of hydrogen sulfide, wherein the cross-linkable rubber composition comprises a nitrile group-containing copolymer rubber (A) which contains α,β-ethylenically unsaturated nitrile monomer units 10 to 60 wt% and has an iodine value of 120 or less, an α,β-ethylenically unsaturated carboxylic acid metal salt (B), and an organic peroxide cross-linking agent (C).

2. The use of a cross-linkable rubber composition according to claim 1, wherein the α,β-ethylenically unsaturated carboxylic acid metal salt (B) is a zinc salt of an α,β-ethylenically unsaturated carboxylic acid.

3. The use of a cross-linkable rubber composition according to claim 1 or 2, wherein the zinc salt of an α,β-ethylenically unsaturated carboxylic acid is zinc methacrylate.

4. The use of a cross-linkable rubber composition according to any one of claims 1 to 3, further comprising a co-cross-linking agent.

5. The use of a cross-linkable rubber composition according to claim 4 wherein the co-cross-linking agent is a tri- to pentafunctional methacrylate compound and/or tri- to pentafunctional acrylate compound.

6. The use of a cross-linkable rubber composition according to any one of claims 1 to 5 in an environment with a ratio of hydrogen sulfide of 1 volume ppb to 50 vol%.

7. The use of a cross-linkable rubber composition according to any one of claims 1 to 6 for producing an O-ring with a cross-sectional diameter of 5 mm or more.

8. Use of a seal material at an oilfield or gas well in the presence of hydrogen sulfide, wherein the seal material is comprised of the cross-linkable rubber composition according to any one of claims 1 to 7, which is cross-linked.

9. The use of a seal material according to claim 8 which is an O-ring with a cross-sectional diameter of 5 mm or more.

10. The use of a seal material according to claim 8 or 9 in an environment with a ratio of hydrogen sulfide of 1 volume ppb to 50 vol%.

## Patentansprüche

1. Verwendung einer vernetzbaren Kautschukzusammensetzung als ein Dichtungsmaterial bei einem Ölfeld oder einem Gasbohrloch in Gegenwart von Schwefelwasserstoff, wobei die vernetzbare Kautschukzusammensetzung einen nitrilgruppenhaltigen Copolymerkautschuk (A), der 10 bis 60 Gew.-% α,β-ethylenisch ungesättigte Nitrilmonomereinheiten enthält und eine Iodzahl von 120 oder weniger aufweist, ein Metallsalz einer α,β-ethylenisch ungesättigten Carbonsäure (B) und ein organisches Peroxid-Vernetzungsmittel (C) umfasst.

2. Verwendung einer vernetzbaren Kautschukzusammensetzung nach Anspruch 1, wobei das Metallsalz einer α,β-ethylenisch ungesättigten Carbonsäure (B) ein Zinksalz einer α,β-ethylenisch ungesättigten Carbonsäure ist.

3. Verwendung einer vernetzbaren Kautschukzusammensetzung nach Anspruch 1 oder 2, wobei das Zinksalz einer α,β-ethylenisch ungesättigten Carbonsäure Zinkmethacrylat ist.

4. Verwendung einer vernetzbaren Kautschukzusammensetzung nach einem der Ansprüche 1 bis 3, weiterhin umfassend ein Co-Vernetzungsmittel.

5. Verwendung einer vernetzbaren Kautschukzusammensetzung nach Anspruch 4, wobei das Co-Vernetzungsmittel eine tri- bis pentafunktionelle Methacrylatverbindung und/oder eine tri- bis pentafunktionelle Acrylatverbindung ist.

6. Verwendung einer vernetzbaren Kautschukzusammensetzung nach einem der Ansprüche 1 bis 5 in einer Umgebung mit einem Schwefelwasserstoffanteil von 1 Volumen ppb bis 50 Vol.-%.

7. Verwendung einer vernetzbaren Kautschukzusammensetzung nach einem der Ansprüche 1 bis 6 zur Herstellung eines O-Rings mit einem Querschnittsdurchmesser von 5 mm oder mehr.

8. Verwendung eines Dichtungsmaterials bei einem Ölfeld oder einem Gasbohrloch in Gegenwart von Schwefelwasserstoff, wobei das Dichtungsmaterial aus der vernetzbaren Kautschukzusammensetzung nach einem der Ansprüche 1 bis 7, die vernetzt ist, besteht.

9. Verwendung eines Dichtungsmaterials nach Anspruch 8, das ein O-Ring mit einem Querschnittsdurchmesser von 5 mm oder mehr ist.

10. Verwendung eines Dichtungsmaterials nach Anspruch 8 oder 9 in einer Umgebung mit einem Schwefelwasserstoffanteil von 1 Volumen ppb bis 50 Vol.-%.

## Revendications

1. Utilisation d'une composition de caoutchouc réticulable comme matériau de joint au niveau d'un champ de pétrole ou d'un puits de gaz en présence de sulfure d'hydrogène, dans laquelle la composition de caoutchouc réticulable comprend un caoutchouc copolymère contenant un groupe nitrile (A) qui contient des motifs monomères de nitrile α,β-éthyléniquement insaturés à 10 à 60 % en poids et a un indice d'iode de 120 ou moins, un sel de métal d'acide carboxylique α,β-éthyléniquement insaturé (B), et un agent de réticulation peroxyde organique (C).

2. Utilisation d'une composition de caoutchouc réticulable selon la revendication 1, dans laquelle le sel de métal d'acide carboxylique α,β-éthyléniquement insaturé (B) est un sel de zinc d'un acide carboxylique α,β-éthyléniquement insaturé.

3. Utilisation d'une composition de caoutchouc réticulable selon la revendication 1 ou 2, dans laquelle le sel de zinc d'un acide carboxylique α,β-éthyléniquement insaturé est le méthacrylate de zinc.

4. Utilisation d'une composition de caoutchouc réticulable selon l'une quelconque des revendications 1 à 3, comprenant en outre un agent de co-réticulation.

5. Utilisation d'une composition de caoutchouc réticulable selon la revendication 4, dans laquelle l'agent de co-réticulation est un composé méthacrylate tri- à pentafonctionnel et/ou un composé acrylate tri- à pentafonctionnel.

6. Utilisation d'une composition de caoutchouc réticulable selon l'une quelconque des revendications 1 à 5, dans un environnement présentant un rapport de sulfure d'hydrogène de 1 volume ppb à 50 % en volume.

7. Utilisation d'une composition de caoutchouc réticulable selon l'une quelconque des revendications 1 à 6, pour produire un joint torique présentant un diamètre de section transversale de 5 mm ou plus.

8. Utilisation d'un matériau de joint au niveau d'un champ de pétrole ou d'un puits de gaz en présence de sulfure d'hydrogène, dans laquelle le matériau de joint est composé de la composition de caoutchouc réticulable selon l'une quelconque des revendications 1 à 7, qui est réticulée.

9. Utilisation d'un matériau de joint selon la revendication 8, qui est un joint torique avec un diamètre de section de 5 mm ou plus.

10. Utilisation d'un matériau de joint selon la revendication 8 ou 9, dans un environnement présentant un rapport de sulfure d'hydrogène de 1 volume ppb à 50 % en volume.
